# EUROPEAN PATENT SPECIFICATION

(11) **EP 3 677 773 B1**
(45) Date of publication and mention of the grant of the patent: **08.09.2021**
(21) Application number: 18882069.0
(22) Date of filing: 29.10.2018
(51) Int. Cl.: B63B 35/00, F03D 13/10, F03D 13/40, B63B 27/00, B63B 75/00, B63B 77/10

(54) **OFFSHORE WIND TURBINE INSTALLATION SYSTEM**
INSTALLATIONSSYSTEM FÜR OFFSHORE-WINDENERGIEANLAGE
SYSTÈME D'INSTALLATION D'ÉOLIENNE EN MER

(30) Priority: 23.11.2017 CN 201711184853
(43) Date of publication of application: 08.07.2020
(73) Proprietor: Wuhan University Of Technology, Hongshan District Wuhan Hubei 430070 (CN)
(72) Inventor: ZHU, Ling, Wuhan Hubei 430070 (CN); CHEN, Mingsheng, Wuhan Hubei 430070 (CN); WANG, Jiayue, Wuhan Hubei 430070 (CN); ZOU, Meiyan, Wuhan Hubei 430070 (CN); DENG, Xu, Wuhan Hubei 430070 (CN); DU, Huizi, Wuhan Hubei 430070 (CN); CHEN, Tianxi, Wuhan Hubei 430070 (CN); YU, Jinheng, Wuhan Hubei 430070 (CN)
(74) Representative: Laufhütte, Dieter
(86) International application number: PCT/CN2018/112371
(87) International publication number: WO 2019/100908

(56) References cited:
- CN-A- 102 442 409
- CN-A- 103 167 983
- CN-A- 104 121 154
- CN-A- 107 939 614
- KR-A- 20130 120 164
- KR-A- 20160 067 465
- US-A1- 2013 051 925

## Description

### Field

The present invention relates to the technical field of installation of offshore wind turbines, in particular to a hydraulic inclined jacking installation system for offshore wind turbines.

### Background

With the consistent increase of global offshore wind power development and construction, the demand for offshore wind turbine installation vessels in the Asia-Pacific region is also increasing.

At present, there are two main types of offshore wind turbine installation methods: modular lift installation and single lift installation of the integrated offshore wind turbine. In the modular lift installation scheme, the offshore foundation is installed first; then the wind turbine tower is lifted onto the foundation, and finally the nacelle and blades are lifted onto the tower. This method entails a long offshore commissioning time, and is extremely sensitive to the weather conditions. However, for this method, the requirement on the lifting capacity of the wind turbine installation vessel is not tight. The single lift installation method is to firstly assemble the tower, the nacelle and blades to form the integrated wind turbine on land, which is then transported to the offshore site for installation by an additional transport vessel. By this method, the integrated wind turbine is lifted onto the pre-installed foundation by a floating crane vessel. Therefore, this method can reduce the offshore lifting work with high altitude. Compared with the modular lift installation method, the single lift installation method has shorter offshore installation time, but put high requirements for the lifting capacity of the offshore installation vessel and the capacity of the transport vessel for integrated wind turbines. For the single lift method, the number of wind turbines that can be installed on one route is 1 or 2, and the number is quite limited. Due to the vertical installation and transportation of the wind turbines, the center of gravity of the vessel is relatively high.

From the US 2013/051925 A1 is a method and a device known for installation of an offshore elongated offshore structure are disclosed. The device includes a vessel an outer frame pivotable in relation to the vessel between a substantially horizontal position for transporting the elongated offshore structure to the installation site and a substantially vertical position for installation of the elongated offshore structure at the installation site. A connection device is provided for connection of the elongated offshore structure to the outer frame via a longitudinal actuation device. The connection device includes a first supporting element for providing the elongated offshore structure in a free hanging configuration when the outer frame is in the substantially vertical position. The longitudinal actuation device is provided for lowering the elongated offshore structure towards the seabed when the elongated offshore structure is in the free hanging configuration.

As can be seen from the above, the traditional modular lift installation and single lift installation methods have low efficiency, long offshore commissioning time, and are extremely sensitive to the weather conditions, thereby increasing the uncertainty of a construction period.

### Summary

The technical problem to be solved by the present invention is to solve the shortcomings associated with the traditional offshore wind turbine installation methods, and provide a hydraulic inclined jacking system for offshore wind turbines, which can improve the installation efficiency and reduce the installation risk and cost.

The technical scheme adopted by the present invention to solve the above technical problems is described as follows:
The beneficial effects of the present invention are:
1. The installation steps are optimized and the installation efficiency is improved.
   The hydraulic inclined jacking installation system for offshore wind turbines mainly comprises a wind turbine installation vessel, a rotating device, a hydraulic system and wind turbine arrangement lifting devices. After the machine hands hold the tower, the hydraulic system jacks rotating arms upward to rotate around a stern beam, meanwhile the stern beam can move up and down along stern guide rails, and the two ends of the rotating arms work together to finally complete the standing, installation and mating between the wind turbine and the pre-installed foundation. This installation method can effectively shorten the time required to complete the installation of one offshore wind turbine: it takes about 12 hours to complete the installation of an offshore wind turbine by the traditional modular lift installation method. If the new method present here is adopted, assuming that the average inclined advance is 10 m per hour, the displacement of the center of gravity of the wind turbine during the erection operation is L = 47 m, and the positioning and docking takes 2 hours, the whole installation process can be completed within 7 hours.
2. Multiple groups of machine hands hold the wind turbine to improve the installation stability.
   The installation of the offshore wind turbine is greatly affected by sea conditions, and the installation stability of high-altitude operation directly affects the service life of the wind turbine. Five groups of machine hands are utilized to hold the wind turbine tower at a height of 5m to 50m. In order to prevent the deformation of the surface of the wind turbine tower and peeling the paint by the force of the machine hands, a rubber material is pre-padded inside each machine hand to improve the friction force. The center of gravity of the wind turbine is located at a height of 45m. The holding range of the machine hands can cover the center of gravity of the wind turbine. The five groups of machine hands work at the same time to enable the wind turbine to be more firmly fixed during the installation. From the horizontal state to the vertical state, compared with the original installation method, the wind projection area of the wind turbine under vertical state is reduced, the center of gravity is lowered, and the stability during the installation is improved.
3. Intelligent installation control is adopted, and the installation is more efficient and accurate.
   After the machine hands hold the wind turbine, an intelligent control system enables the hydraulic arms and the stern beam to work together, so that the center of gravity of the wind turbine moves along the connecting line of the center of gravity positions before and after installation during the inclined jacking installation, that is, the coordinated work is performed in a manner in which the work doing change of the center of gravity is minimized, thereby completing the inclined jacking installation of the wind turbine. The intelligent control can shorten the inclined jacking time, reduce energy consumption during installation, and improve the accuracy of installation.
4. The wind turbine lifters realize the vertical layered arrangement of the wind turbines.

One offshore wind turbine is fixed by four groups of wind turbine lifters during transportation. The wind turbine lifters can rise and fall along the midship pillars. Due to the use of the four groups of wind turbine lifters, the vertical layered arrangement of the overall offshore wind turbines on the vessel can be achieved, and the space is greatly saved.

### Brief Description of the Drawings

The present invention will be further described below in conjunction with the accompanying drawings and embodiments. In the accompanying drawings:
Fig. 1 is an overall schematic view of the hydraulic inclined jacking installation system for offshore wind turbines of the present invention.

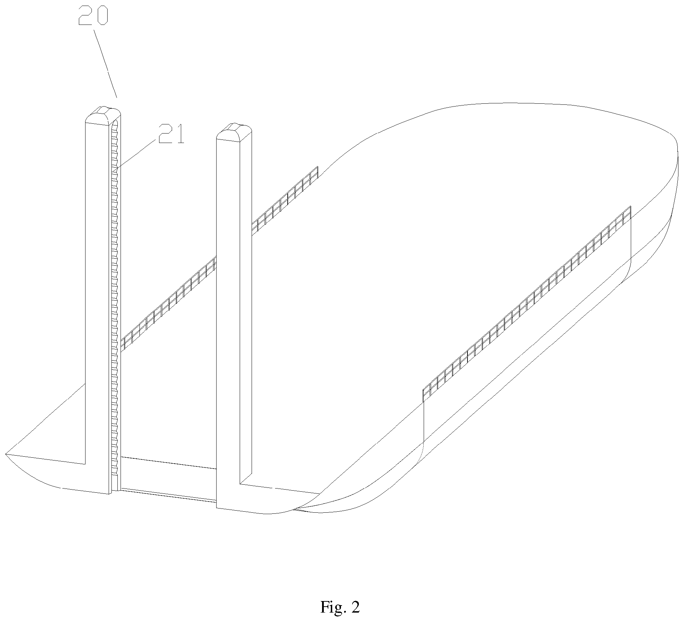

Fig. 2 is a schematic structural diagram of a stern post of the hydraulic inclined jacking installation system for offshore wind turbines shown in Fig. 1.

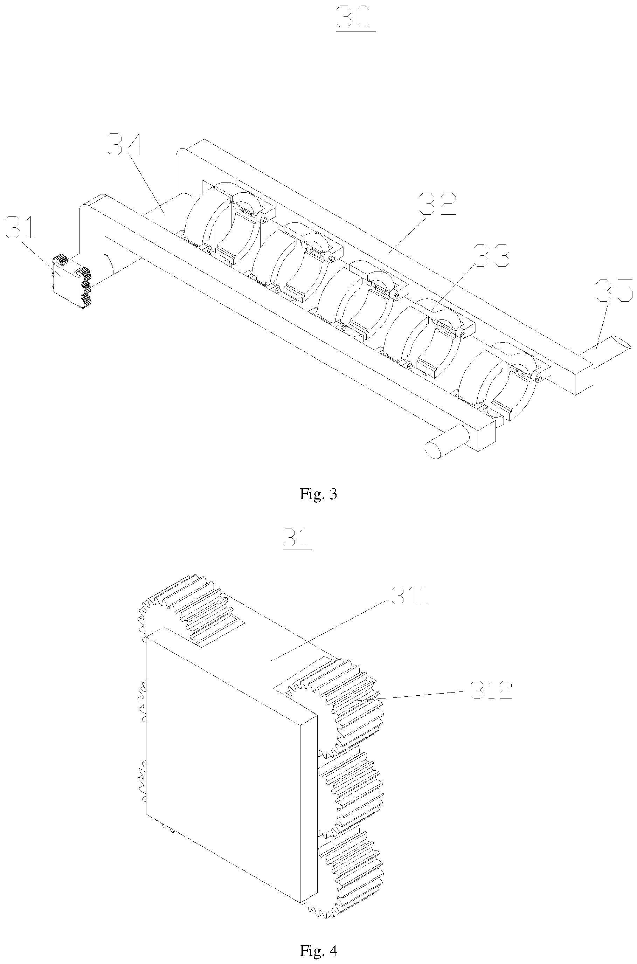

Fig. 3 is a schematic structural diagram of a rotating device of the hydraulic inclined jacking installation system for offshore wind turbines shown in Fig. 1.
Fig. 4 is a schematic structural diagram of a gear lifting mechanism of the rotating device shown in Fig. 3.

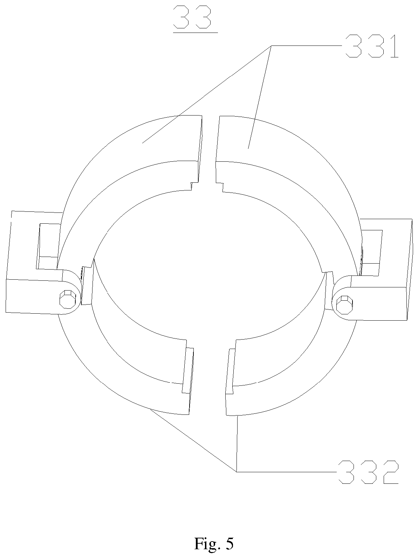

Fig. 5 is a schematic structural diagram of a machine hand of the rotating device shown in Fig. 3.

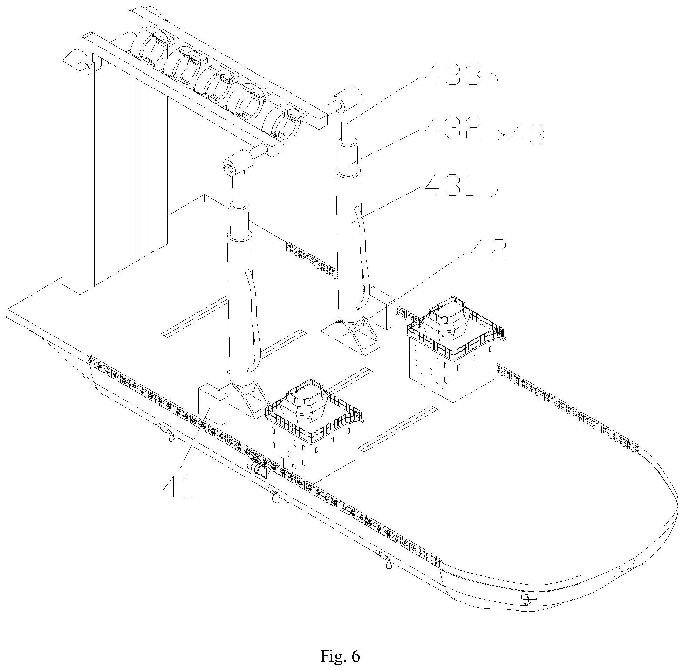

Fig. 6 is a structural schematic diagram of a hydraulic system of the hydraulic inclined jacking installation system for offshore wind turbines shown in Fig. 1.

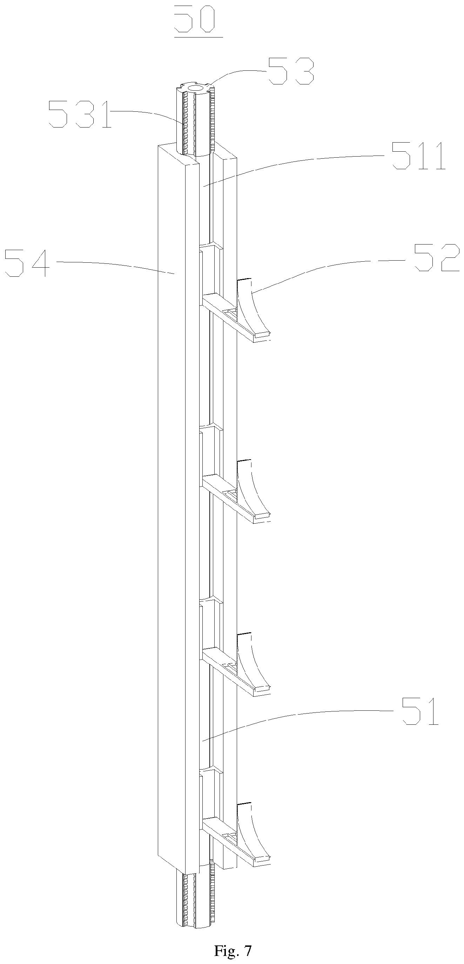

Fig. 7 is a schematic structural diagram of a wind turbine arrangement lifting device of the hydraulic inclined jacking installation system for offshore wind turbines shown in Fig. 1.

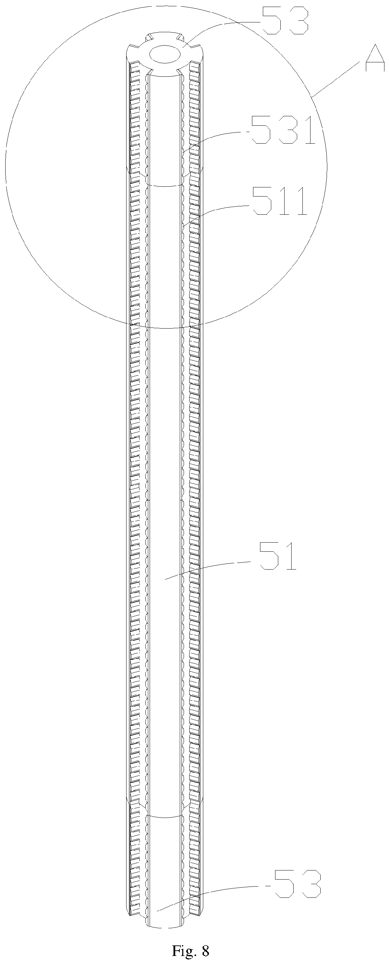

Fig. 8 is a schematic structural diagram of a midship pillar and rotating storage devices of the wind turbine arrangement lifting device shown in Fig. 7.

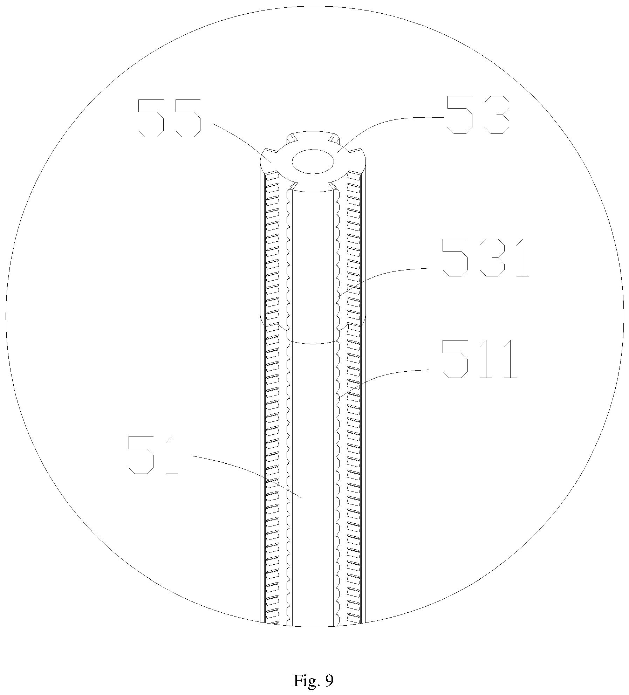

Fig. 9 is an enlarged view of position A of the wind turbine arrangement lifting device shown in Fig. 7.
Fig. 10 is a schematic structural diagram of a wind turbine lifter of the wind turbine arrangement lifting device shown in Fig. 7.
Fig. 11 is the side view of vertical layered arrangement of the wind turbines of the hydraulic inclined jacking installation system for offshore wind turbines shown in Fig. 1.
Fig. 12 is the front view of an operating state of the hydraulic inclined jacking installation system for offshore wind turbines shown in Fig. 1.

In the drawings: 10, wind turbine installation vessel; 20, stern post; 21, stern guide rail; 30, rotating device; 31, gear lifting mechanism; 311, gear mounting frame; 312, first gear; 32, rotating arm; 33, machine hands; 331, upper machine hands; 332, lower machine hands; 34, stern beam; 35, connecting rod; 40, hydraulic system; 41, hydraulic power unit; 42, hydraulic base; 43, telescopic hydraulic cylinder; 431, first-stage hydraulic rod; 432, second-stage hydraulic rod; 433, third-stage hydraulic rod; 50, wind turbine arrangement lifting device; 51, midship pillar; 511, first rail; 52, wind turbine lifter; 521, second gear; 522, slider; 523, cantilever beam; 524, propeller; 525, fixing clamp; 53, rotating storage device; 531, second rail; 54, sleeve; 55, dovetail joint; 60, wind turbine.

### Detailed Description of the Embodiments

In order to more clearly understand the technical features, objects, and effects of the present invention, specific embodiments of the present invention will now be described in detail with reference to the accompanying drawings.

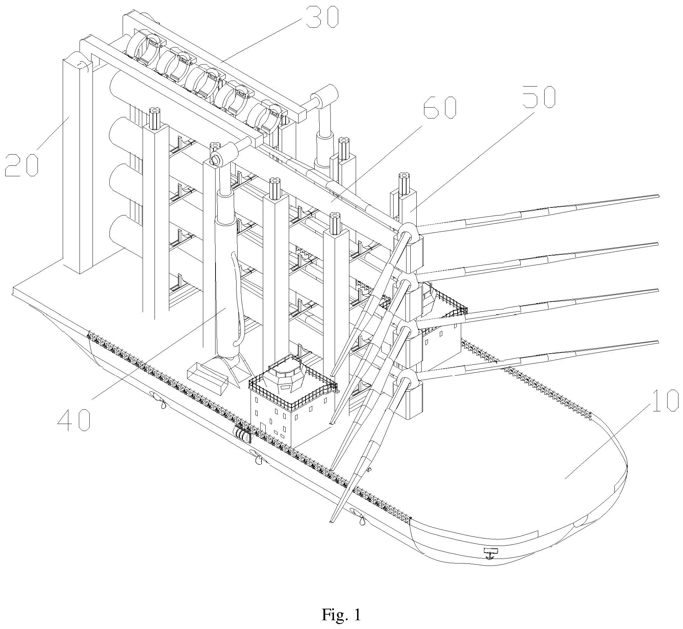

As shown in Fig. 1, a hydraulic inclined jacking installation system for offshore wind turbines according to a preferred embodiment of the present invention comprises a wind turbine installation vessel 10, stern posts 20, a rotating device 30, a hydraulic system 40 and wind turbine arrangement lifting devices 50.

The stern posts 20 are vertically mounted on the stern of the deck of the wind turbine installation vessel 10, and the stern posts 20 are provided with vertical stern guide rails 21.

The rotating device 30 comprises gear lifting mechanisms 31, rotating arms 32 and machine hands 33. The gear lifting mechanisms 31 are in fit with the stern guide rails 21 and can move up and down along the stern guide rails 21. The tail ends of the rotating arms 32 are hinged to the gear lifting mechanisms 31. The machine hands 33 are mounted on the rotating arms 32, and the rotating arms 32 can perform lifting motion along the stern guide rails 21 synchronously with the gear lifting mechanisms 31.

The hydraulic system 40 provides power for the inclined jacking installation of wind turbines 60, and comprises hydraulic power units 41 and telescopic hydraulic cylinders 43 mounted on the deck. The bottom ends of the telescopic hydraulic cylinders 43 are hinged to the deck, and the top ends of the telescopic hydraulic cylinders 43 are hinged to the head ends of the rotating arms 32. The hydraulic power units 41 drive the telescopic hydraulic cylinders 43 to extend and contract in the axial direction, thereby jacking the rotating arms 32 to rotate.

The wind turbine arrangement lifting devices 50 are mounted on the deck of the wind turbine installation vessel 10, and are correspondingly arranged below the rotating arms 32, and the wind turbines 60 waiting to be installed are horizontally arranged on the wind turbine arrangement lifting devices 50. The machine hands 33 are used to hold the towers of the wind turbines.

Further optimally, in the present embodiment, two stern posts 20 are disposed and are symmetrically disposed on the port side and starboard side of the deck. Correspondingly, two gear lifting mechanisms 31 are disposed, and are in fit with the stern guide rails 21 on the two stern posts 20 respectively. The two gear lifting mechanisms 31 are connected by a stern beam 34, so that the two gear lifting mechanisms 31 are always remained on the same horizontal line when moving up and down.

Further optimally, in the present embodiment, each gear lifting mechanism 31 comprises a gear mounting frame 311 and first gears 312 mounted on two sides of the gear mounting frame 311. The opposite surfaces of the two stern posts 20 are each provided with a vertical groove, and racks are disposed on two opposite side surfaces of each groove. The two racks in the grooves form the stern guide rails 21. The gear mounting frames 311 are located in the grooves. The first gears 312 on two sides of each gear mounting frame 311 are respectively meshed with the two racks in the corresponding groove. The gear mounting frames 311 are internally provided with motors for driving the first gears 312 to rotate. The two gear mounting frames 311 are fixedly connected to two ends of the stern beam 34 respectively. Preferably, each gear lifting mechanism 31 comprises six first gears 312 with three first gears being disposed on each of the two sides of the gear mounting frame 311, and the six first gears 312 are embedded in two sides of the gear mounting frame 311. The first gears 312 are driven by the motors to rotate to finally drive the entire rotating device 30 to perform lifting motion on the stern guide rails 21.

Further optimally, in the present embodiment, two rotating arms 32, two hydraulic bases 42 and two telescopic hydraulic cylinders 43 are disposed, and are symmetrically disposed about the longitudinal section in center plane of a hull respectively. The tail ends of the two rotating arms 32 are both hinged to the stern beam 34, and the head ends of the two rotating arms 32 are hinged to the corresponding telescopic hydraulic cylinders 43 respectively. The machine hands 33 are disposed between the two rotating arms 32. Preferably, the tail ends of the rotating arms 32 sleeve the periphery of the stern beam 34, the rotation around the stern beam 34 is realized by a bearing, and the bearing is installed between the end parts of the rotating arms 32 and the stern beam 34.

Further optimally, in the present embodiment, the machine hands 33 are mounted at the inner sides of the rotating arms 32 and comprise upper machine hands 331 and lower machine hands 332 which are hinged to each other. The shapes of the upper machine hands 331 and the lower machine hands 332 are approximately the shape of 1/4 arc. The inner diameters of the upper machine hands 331 and the lower machine hands 332 are slightly greater than the outer diameters of the towers of the wind turbines. Rubber materials are laid on the inner surfaces of the machine hands 33 to protect the surfaces of the towers and increase the contact friction force. The machine hands 33 on the two rotating arms 32 are disposed symmetrically with respect to the longitudinal section in center plane of the hull. Two symmetrically disposed machine hands 33 form one group, and form a complete circle in the closed state. When the machine hands 33 need to hold the towers of the wind turbines, the rotating device 30 is horizontal, and the lower machine hands 332 rotate to be opened and are then closed for holding the towers of the wind turbines. When the machine hands need to be separated from the wind turbines 60 after the wind turbines 60 and wind turbine bases are mated, the rotating device 30 is vertical, and the upper machine hands 331 rotate to be opened so as to release the towers of the wind turbines.

Further optimally, in the present embodiment, five groups of machine hands 33 are disposed and are uniformly arranged in the length direction of the rotating arms 32. Two groups of machine hands 33 at the end parts are used for correspondingly holding the 5m and 50m height sections of the towers of the wind turbines respectively. The centers of gravity of the wind turbines 60 are located at a height of 45m. The centers of gravity of the wind turbines are located within the holding range of the five groups of machine hands 33. The five groups of machine hands 33 act at the same time, thereby enabling the fixation of the wind turbines to be firmer.

Further optimally, in the present embodiment, the hydraulic system 40 further comprises hydraulic bases 42, which are fixedly mounted on the deck. Each telescopic hydraulic cylinder 43 comprises a first-stage hydraulic rod 431, a second-stage hydraulic rod 432 and a third-stage hydraulic rod 433 which are sequentially nested from outside to inside. The bottoms of the first-stage hydraulic rods 431 are hinged to the hydraulic bases 42 by bearings, thereby ensuring that the telescopic hydraulic cylinders 43 can rotate in the length plane of the vessel. The top ends of the third-stage hydraulic rods 433 are connected to the rotating arms 32 by connecting rods 35. One ends of the connecting rods 35 are fixedly connected to the rotating arms 32. The other ends of the connecting rods 35 sleeve the peripheries of the third-stage hydraulic rods 433. The rotation of the third-stage hydraulic rods 433 is realized by the bearings. Each hydraulic power unit 41 provides power for the extension and contraction of three hydraulic rods. Firstly, the second-stage hydraulic rods 432 are jacked to move upward. When the second-stage hydraulic rods 432 reach the maximum stroke, the third-stage hydraulic rods 433 are jacked to move upward. Since the hydraulic stroke of the offshore wind turbines 60 is relatively long during installation, the three hydraulic rods on each side are disposed to reduce the length of a single hydraulic rod, thereby ensuring that the stresses of all stages of hydraulic rods meet the structural strength requirements during the lifting of the telescopic hydraulic cylinders 43.

Further optimally, in the present embodiment, each wind turbine arrangement lifting device 50 comprises a midship pillar 51 and wind turbine lifters 52. The midship pillars 51 are vertically mounted on the deck of the wind turbine installation vessel 10. The midship pillars 51 are provided with vertical first rails 511. The wind turbine lifters 52 are in fit with the first rails 511 and can move up and down along the first rails 511. Each wind turbine lifter 52 comprises a slider 522 and a cantilever beam 523. The sliders 522 are provided with driving devices (not shown) therein, and the driving devices drive the slider 522 to move up and down along the first rails 511. The cantilever beams 523 are fixedly connected to the sliders 522. Fixing clamps 525 are mounted at the end parts of the cantilever beams 523, and the fixing clamps 525 are used for holding the wind turbines 60.

The sliders 522 are provided with motors therein to drive second gears 521 to move up and down along the first rails 511. The cantilever beams 523 are perpendicular to the midship pillar 51, and the fixing clamps 525 are mounted at the end parts of the cantilever beams 523 for holding the wind turbines 60. The fixing clamps 525 are arc-shaped, and non-slip pads are mounted on the inner surfaces of the fixing clamps 525. Propellers 524 are mounted on the cantilever beams 523. The propellers 524 can jack the fixing clamps 525 to move in the horizontal direction to adjust clamping force of the fixing clamps 525 for the towers of the wind turbines, thereby preventing the shaking and displacement during transportation.

Further optimally, in the present embodiment, vertical dovetail joints 55 are disposed on the midship pillars 51, the dovetail joints 55 are in the shape of an arc block, and vertical racks are disposed on two side surfaces of the dovetail joints 55, and form the first rail 511 together. The second gears 521 are mounted at the inner sides of the sliders 522, and the cantilever beams 523 are mounted on the outer sides of the sliders 522. The second gears 521 are meshed with the rack rails. The motors in the sliders 522 drive the second gears 521 to move up and down along the first rails 511.

Further optimally, in the present embodiment, the inner side surfaces of the sliders 522 are concave arc surfaces, and are matched with the outer arc surfaces of the dovetail joints 55. Two columns of second gears 521 are disposed at the inner side surface of each slider 522, each column comprises at least one second gear 521, the two columns of second gears 521 on each slider 522 are respectively meshed with the racks on two side surfaces of the corresponding dovetail joint 55, and the driving devices in the sliders 522 drive the second gears 521 to rotate on the racks, so as to drive the whole wind turbine lifters 52 to perform lifting motion on the midship pillars 51.

Further optimally, in order to improve the installation efficiency and save resources, multiple wind turbines (usually 3-5) may be arranged on the wind turbine installation vessel 10. In the present embodiment, four wind turbines are used as an example. Each midship pillar 51 is provided with four wind turbine lifters 52 correspondingly. In order to realize the smooth placement and installation process of the four wind turbines, the top and bottom ends of each midship pillar 51 are provided with rotating storage devices 53 for parking the idle wind turbine lifts 52. The rotating storage devices 53 at two ends of each midship pillar 51 are coaxially disposed with the midship pillar 51 and can rotate around the central axis. Each rotating storage device 53 is provided with four second rails 531 in the circumferential direction (the number of the second rails 531 is equal to the number of the wind turbine lifters 52). The second rails 531 have the same structure as the first rails 511 and can be mated with the first rails 511.

Specifically, the rotating storage device 53 is provided with an equal number of dovetail joints 55 along the circumference to the wind turbine lifter 52, and vertical racks are disposed on two side surfaces of each dovetail joint 55, and form the second rail 531 together. The structures and dimensions of the dovetail joints 55 on the midship pillars 51 and the dovetail joints 55 on the rotating storage devices 53 are the same, so that the first rails 511 and the second rails 531 can be mated.

Before the wind turbines 60 are loaded-out onto the vessel, four wind turbine lifters 52 on each midship pillar 51 are placed at an angle of 90 degrees relative to each other on the four second rails 531 of the rotating storage device 53 at the bottom. After the wind turbines 60 are loaded-out onto the vessel, the four wind turbine lifters 52 on each midship pillar 51 sequentially rotate to the working positions, and then rise to the same height as the wind turbines 60 to lift the four wind turbines 60 to appropriate positions. After the offshore installation process of the wind turbines 60 is completed, the four wind turbine lifters 52 on each midship pillar 51 sequentially rise to the second rails 531 of the rotating storage device 53 on the top and rotate for 90 degrees. After the rotation of 90 degrees every time, the second rails 531 and the first rails 511 are mated and matched, so that the next wind turbine lifters 52 can climb to the second rails 531. After the offshore installation process of the four wind turbines 60 is completed, all four wind turbine lifters 52 on each midship pillar 51 are placed on the rotating storage device 53 on the top at an angle of 90 degrees.

Further optimally, in the present embodiment, the rotating storage devices 53 at the bottom ends of the midship pillars 51 are located below the deck of the wind turbine installation vessel 10, and deck openings is arranged at the joint between the deck and the midship pillars 51. When a transporter loaded with a wind turbine 60 boards the vessel, the deck openings are opened, and the wind turbine lifters 52 rise to the same level as the wind turbine 60. The fixing clamps 525 hold the wind turbine 60 and firmly support the wind turbine 60. At this time, the whole weight of the wind turbine 60 is on the wind turbine arrangement lifting devices 50, and then the transporter can retreat from the hull via the gangway ladder. The wind turbine arrangement lifting devices 50 then raises the wind turbine 60 to a specified position.

Further optimally, in the present embodiment, the wind turbine arrangement lifting devices 50 further comprise sleeves 54 which sleeve the peripheries of the midship pillars 51. One sides of the sleeves 54 are provided with vertical openings, and the cantilever beams 523 of the wind turbine lifters 52 protrude from the opening ends of the sleeves 54. The sleeves 54 are used to reinforce and protect the midship pillars 51.

Further optimally, in the present embodiment, the wind turbine arrangement lifting devices 50 symmetrically arranged on the port side and starboard side of the wind turbine installation vessel 10 with every two wind turbine arrangement lifting devices forming one group. The wind turbine installation vessel 10 is provided with four groups of wind turbine arrangement lifting devices 50 along the length direction of the vessel to form a wind turbine arrangement lifting system.

The process of installing the offshore wind turbines by using the hydraulic inclined jacking installation system for offshore wind turbines of the present invention is as follows:

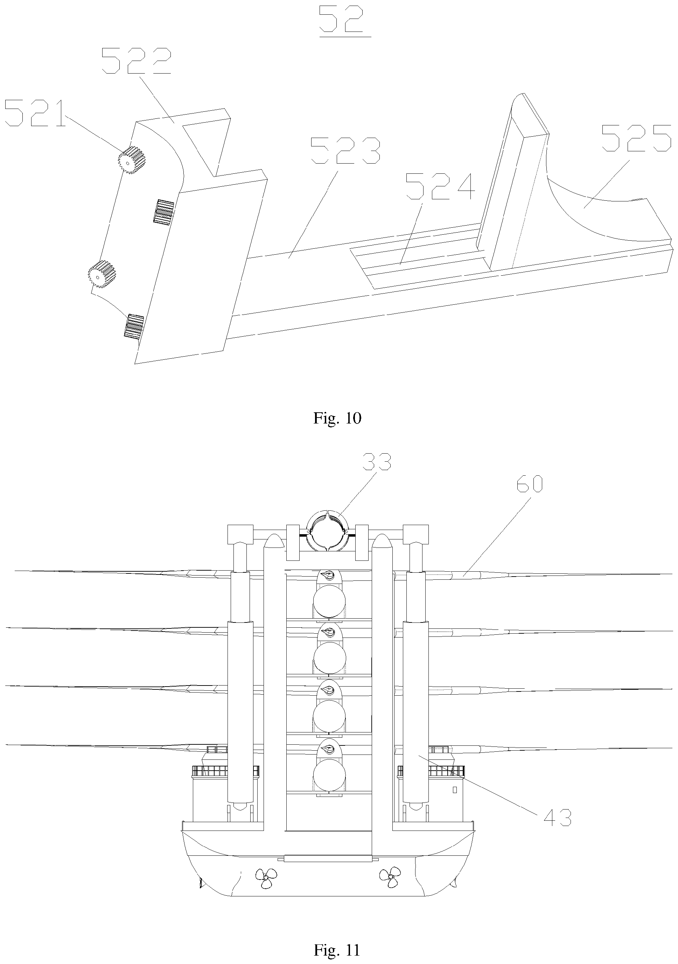

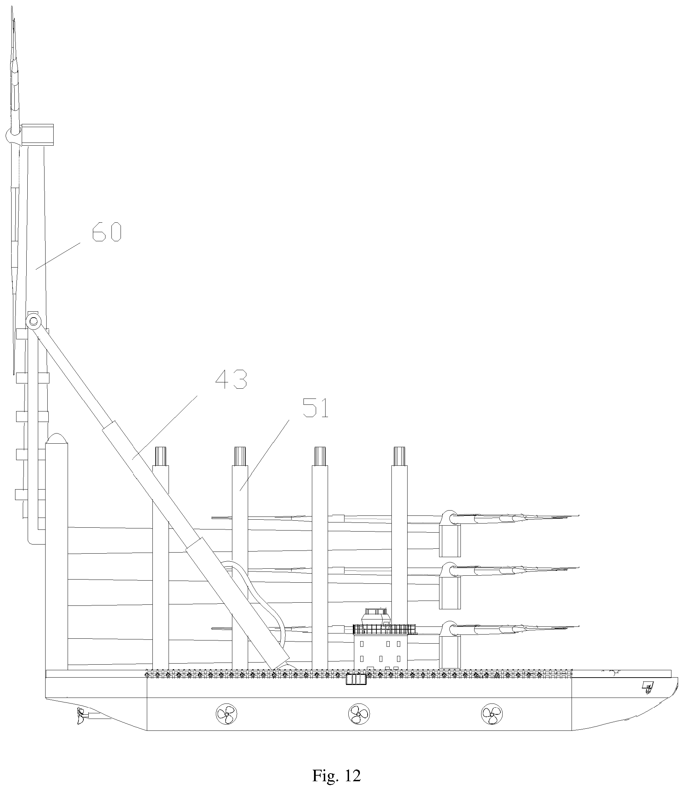

The arrangement state of the four wind turbines 60 under the support of the wind turbine arrangement lifting devices 50 when the four wind turbines reach a designated installation sea area is as shown in Fig. 11; the lower machine hands 332 on the rotating arms 32 are opened, and the horizontally placed wind turbines rise to the interiors of the machine hands 33 under the simultaneous action of the four groups of wind turbine lifters 52. The lower machine hands 332 are closed, and the rubber layers inside the machine hands 33 plays roles in protecting and buffering the towers of the wind turbines. The hydraulic power units 41 provide power for the telescopic hydraulic cylinders 43, so that the hydraulic system 40 is enabled to slowly jack the rotating arms 32 to rotate around the stern beams 34. Meanwhile, the gear lifting mechanisms 31 on the stern beam 34 drive the stern beam 34 to move downward, and drive the rotating arms 32 and the wind turbine 60 to move slowly downward, so that the bottom of the tower of the wind turbine is close to the offshore pre-installed foundation. The hydraulic system 40 continues to jack in an inclined manner, and finally the wind turbine changes from a horizontal state to a vertical state, as shown in Fig.12. The wind turbine installation vessel 10 uses a power positioning system to position the bottom of the tower of the wind turbine and the base on the same vertical line. The gear lifting mechanisms 31 drive the rotating arms 32 and the wind turbine 60 to continue to slowly descend for finally completing the precise mating of the tower and the pre-installed foundation. Then the upper machine hands 331 are opened, the wind turbine installation vessel 10 moves forward, the rotating arms 32 are separated from the wind turbine, and the hydraulic system 40 drives the rotating arms 32 to be restored to the horizontal state, thereby completing the hydraulic inclined installation of the integrated offshore wind turbine. Then the installation of the other three wind turbines 60 is completed by the same method.

The embodiments in the description are described in a progressive manner. Each embodiment focuses on the differences from other embodiments. The same and similar parts between the embodiments may refer to each other.

The embodiments of the present invention have been described with reference to the accompanying drawings, but the present invention is not limited to the above specific implementation manners, and the above specific implementation manners are only schematic rather than restrictive. Those ordinary skilled in the art could make many forms under the revelation of the present invention without departing from the spirit of the present invention and the scope protected by the claims, and these forms belong to the protection of the present invention.

## Claims

1. A hydraulic inclined jacking installation system for offshore wind turbines (60), the system
comprising a wind turbine installation vessel (10), stern posts (20), a rotating device (30), a hydraulic system (40) and wind turbine arrangement lifting devices (50), wherein: the stern posts (20) are vertically mounted on the stern of a deck of the wind turbine installation vessel (10), and the stern posts (20) are provided with vertical stern guide rails (21);
the rotating device (30) comprises gear lifting mechanisms (31), rotating arms (32) and machine hands (33), the gear lifting mechanisms (31) are matched with the stern guide rails (21) and can move up and down along the stern guide rails (21), the tail ends of the rotating arms (32) are hinged to the gear lifting mechanisms (31), and the machine hands (33) are mounted on the rotating arms (32);
the hydraulic system (40) comprises hydraulic power units (41) and telescopic hydraulic cylinders (43) mounted on the deck, the bottom ends of the telescopic hydraulic cylinders (43) are hinged to the deck, the top ends of the telescopic hydraulic cylinders (43) are hinged to the head ends of the rotating arms (32), and the hydraulic power units (41) are configured to drive the telescopic hydraulic cylinders (43) to extend and contract in the axial direction, thereby jacking the rotating arms (32) to rotate; and
the wind turbine arrangement lifting devices (50) are mounted on the deck of the wind turbine installation vessel (10), and are correspondingly arranged below the rotating arms (32), wind turbines (60) waiting to be installed are horizontally arranged on the wind turbine arrangement lifting devices (50), and the machine hands (33) are used to hold towers of the wind turbines (60).

2. The hydraulic inclined jacking installation system for offshore wind turbines (60) according to claim 1, **characterized in that** two stern posts (20) are disposed, and are disposed symmetrically on a port side and a starboard side of the deck; and correspondingly, two gear lifting mechanisms (31) are disposed, and are respectively matched with the stern guide rails (21) on the two stern posts (20), and the two gear lifting mechanisms (31) are connected by a stern beam (34).

3. The hydraulic inclined jacking installation system for offshore wind turbines (60) according to claim 2, **characterized in that** each gear lifting mechanism (31) comprises a gear mounting frame (311) and first gears (312) mounted on two sides of the gear mounting frame (311), and each gear mounting frame (311) is internally provided with a motor for driving the first gears (312) to rotate; vertical grooves are respectively disposed in opposite surfaces of the two stern posts (20), and racks are disposed on two opposite side surfaces of each groove, and form the corresponding stern guide rail (21); the gear mounting frames (311) are located in the grooves, and the first gears (312) on two sides of each gear mounting frame (311) are respectively meshed with the two racks in the corresponding groove, and the motors drive the first gears (312) to rotate on the racks; and the two gear mounting frames (311) are respectively fixedly connected to two ends of the stern beam (34).

4. The hydraulic inclined jacking installation system for offshore wind turbines (60) according to claim 2, **characterized in that** two rotating arms (32) and two telescopic hydraulic cylinders (43) are correspondingly disposed, and are symmetrically disposed about the longitudinal section in center plane of a hull respectively; the tail ends of the two rotating arms (32) are hinged to the stern beam (34), and the head ends of the two rotating arms (32) are hinged to the two telescopic hydraulic cylinders (43) respectively; and the machine hands (33) are disposed between the two rotating arms (32).

5. The hydraulic inclined jacking installation system for offshore wind turbines (60) according to claim 4, **characterized in that** the machine hands (33) comprise upper machine hands (331) and lower machine hands (332) which are hinged to each other, and the upper machine hands (331) and the lower machine hands (332) are both arc-shaped; the machine hands (33) on the two rotating arms (32) are symmetrically disposed about the longitudinal section in center plane of the hull; and every two symmetrically disposed machine hands (33) form one group, and form a complete circle in a closed state.

6. The hydraulic inclined jacking installation system for offshore wind turbines (60) according to claim 5, **characterized in that** a plurality of groups of machine hands (33) are disposed, and are arranged uniformly in the length direction of the rotating arms (32).

7. The hydraulic inclined jacking installation system for offshore wind turbines (60) according to claim 1, **characterized in that** the hydraulic system further comprises hydraulic bases (42), and the hydraulic bases (42) are fixedly mounted on the deck; each telescopic hydraulic cylinder comprises a first-stage hydraulic rod (431), a second-stage hydraulic rod (432) and a third-stage hydraulic rod (433) which are sequentially nested from outside to inside; and the bottom ends of the first-stage hydraulic rods (431) are hinged to the hydraulic bases (42), and the top ends of the third-stage hydraulic rods (433) are hinged to the rotating arms (32) by connecting rods (35).

8. The hydraulic inclined jacking installation system for offshore wind turbines (60) according to claim 1, **characterized in that** each wind turbine arrangement lifting device (50) comprises a midship pillar (51) and wind turbine lifters (52), the midship pillars (51) are vertically mounted on the deck of the wind turbine installation vessel (10), vertical first rails (511) is disposed on the midship pillars (51), the wind turbine lifters (52) are in fit with the first rails (511) and can move up and down along the first rails (511), each wind turbine lifter (52) comprises a slider (522) and a cantilever beam (523), the sliders (522) are internally provided with driving devices for driving the sliders (522) to move up and down along the first rails (511), the cantilever beams (523) are fixedly connected to the sliders (522), and the end parts of the cantilever beams (523) are provided with fixing clamps (525) for holding the wind turbines (60).

9. The hydraulic inclined jacking installation system for offshore wind turbines (60) according to claim 8, **characterized in that** vertical dovetail joints (55) are disposed on the midship pillars (51) and are in the shape of arc blocks, and vertical racks are arranged at two side surfaces of each dovetail joint (55), and form the corresponding first rail (511) together; the inner sides of the sliders (522) are provided with second gears (521), the outer sides of the sliders (522) are provided with the cantilever beams (523), the second gears (521) are meshed with the rack rails, and the driving devices in the sliders (522) drive the second gears (521) to move up and down along the first rails (511).

10. The hydraulic inclined jacking installation system for offshore wind turbines (60) according to claim 9, **characterized in that** the inner side surfaces of the sliders (522) are a concave arc surface, and are matched with the outer arc surfaces of the dovetail joints (55), two columns of second gears (521) are disposed at the inner side of each slider (522), each column comprises at least one second gear (521), the two columns of second gears (521) on each slider (522) are respectively meshed with the racks on two side surfaces of the corresponding dovetail joint (55), and the driving devices in the sliders (522) drive the second gears (521) to rotate on the racks, so as to drive the whole wind turbine lifters (52) to perform lifting motion on the midship pillars (51).

11. The hydraulic inclined jacking installation system for offshore wind turbines (60) according to claim 8, **characterized in that** a plurality of wind turbine lifters (52) are disposed, rotating storage devices (53) are installed at the top and bottom ends of each midship pillar (51), the rotating storage devices (53) on each midship pillar (51) are disposed coaxially with the midship pillar (51) and can rotate around a central axis, each rotating storage device (53) is provided with a plurality of second rails (531) in the circumferential direction, the number of the second rails (531) is equal to the number of the wind turbine lifters (52), the second rails (531) have the same structure as the first rails (511) and can be mated with the first rail (511), and the wind turbine lifters (52) can move on the second rails (531).

12. The hydraulic inclined jacking installation system for offshore wind turbines (60) according to claim 11, **characterized in that** the dovetail joints (55) same as the wind turbine lifters (52) in number are uniformly disposed on each rotating storage device (53) in the circumferential direction, and two side surfaces of each dovetail joint (55) are provided with vertical racks, and the two racks form the second rail (531) together.

13. The hydraulic inclined jacking installation system for offshore wind turbines (60) according to claim 11, **characterized in that** the rotating storage devices (53) at the bottom ends of the midship pillars (51) are located below the deck of the wind turbine installation ship, and the joints between the deck and the midship pillars (51) are provided with deck openings.

14. The hydraulic inclined jacking installation system for offshore wind turbines (60) according to claim 8, **characterized in that** the wind turbine arrangement lifting devices (50) further comprise sleeves the sleeves (54) sleeve the peripheries of the midship pillars (51), one sides of the sleeves (54) are provided with vertical openings, the cantilever beams (523) of the wind turbine lifters (52) protrude from the opening ends of the sleeves (54), and the sleeves are used to reinforce and protect the midship pillars (51).

15. The hydraulic inclined jacking installation system for offshore wind turbines (60) according to claim 1, **characterized in that** the wind turbine arrangement lifting devices (50) are symmetrically disposed on the port side and starboard side of the wind turbine installation vessel (10) with every two wind turbine arrangement lifting devices (50) forming one group; and the wind turbine installation vessel (10) is provided with a plurality of groups of wind turbine arrangement lifting devices (50) in the length direction.

## Patentansprüche

1. Hydraulisches, geneigtes Vortriebsinstallationssystem für Offshore-Windturbinen (60), umfassend ein Windturbinen-Installationsschiff (10), Stielpfosten (20), eine Drehvorrichtung (30), ein hydraulisches System (40) und Hebevorrichtungen (50) für die Windturbinenanordnung, wobei die Stielpfosten (20) vertikal auf dem Stiel eines Decks des Windturbinen-Installationsschiffs (10) angebracht sind, und die Stielpfosten (20) mit vertikalen Stielführungsschienen (21) versehen sind;
und wobei die Drehvorrichtung (30) Zahnradhubmechanismen (31), Dreharme (32) und Maschinenhände (33) umfasst, wobei die Zahnradhubmechanismen (31) mit den Stielführungsschienen (21) abgestimmt sind und sich entlang der Stielführungsschienen (21) auf und ab bewegen können, wobei die hinteren Enden der Dreharme (32) an den Zahnradhubmechanismen (31) angelenkt sind und die Maschinenhände (33) an den Dreharmen (32) befestigt sind;
und wobei das hydraulische System (40) Hydraulikaggregate (41) und teleskopische Hydraulikzylinder (43) umfasst, die auf dem Deck montiert sind, wobei die unteren Enden der teleskopischen Hydraulikzylinder (43) an dem Deck angelenkt sind, die oberen Enden der teleskopischen Hydraulikzylinder (43) an den Kopfenden der Dreharme (32) angelenkt sind und die Hydraulikaggregate (41) so konfiguriert sind, dass sie die teleskopischen Hydraulikzylinder (43) antreiben, um sich in der axialen Richtung zu verlängern und zu verkleinern, wodurch die Dreharme (32) zum Drehen angehoben werden; und
wobei die Hebevorrichtungen (50) für die Windturbinenanordnung auf dem Deck des Windturbinen-Installationsschiffs (10) montiert und entsprechend unter der Dreharme (32) angeordnet sind, wobei zur Installation anstehenden Windturbinen (60) horizontal auf die Hebevorrichtungen (50) für die Windturbinenanordnung angeordnet sind und die Maschinenhände (33) zum Halten der Türme der Windturbinen (60) verwendet werden.

2. Hydraulisches, geneigtes Vortriebsinstallationssystem für Offshore-Windturbinen (60) nach Anspruch 1, **dadurch gekennzeichnet, dass** zwei Stielpfosten (20) angeordnet sind und symmetrisch auf einer Portseite und einer Steuerbordseite des Decks angeordnet sind; wobei entsprechend zwei Zahnradhubmechanismen (31) angeordnet sind und jeweils mit den Stielführungsschienen (21) auf den beiden Stielpfosten (20) abgestimmt sind, und die beiden Zahnradhubmechanismen (31) durch einen Stielbalken (34) verbunden sind.

3. Hydraulisches, geneigtes Vortriebsinstallationssystem für Offshore-Windturbinen (60) nach Anspruch 2, **dadurch gekennzeichnet, dass** jeder Zahnradhubmechanismen (31) einen Zahnradmontagerahmen (311) und erste Zahnräder (312) umfasst, die an zwei Seiten des Zahnradmontagerahmens (311) montiert sind, wobei jeder Zahnradmontagerahmen (311) intern mit einem Motor zum Antrieb der ersten Zahnräder (312) versehen ist, um sich zu drehen;
und wobei vertikale Nuten jeweils in gegenüberliegenden Flächen der beiden Stielpfosten (20) angeordnet sind, und Zahnstangen auf zwei gegenüberliegenden Seitenflächen jeder Nut angeordnet sind und die entsprechende Stielführungsschienen (21) bilden; und wobei die Zahnradmontagerahmen (311) in den Nuten angeordnet sind, und die ersten Zahnräder (312) auf zwei Seiten jedes Zahnradmontagerahmens (311) jeweils mit den zwei Zahnstangen in der entsprechenden Nut in Eingriff stehen, wobei die Motoren die ersten Zahnräder (312) antreiben, um sich auf den Zahnstangen zu drehen; und die zwei Zahnradmontagerahmen (311) jeweils fest mit zwei Enden des Stielbalkens (34) verbunden sind.

4. Hydraulisches, geneigtes Vortriebsinstallationssystem für Offshore-Windturbinen (60) nach Anspruch 2, **dadurch gekennzeichnet, dass** zwei Dreharme (32) und zwei teleskopische Hydraulikzylinder (43) entsprechend angeordnet sind und jeweils symmetrisch um den Längsschnitt in der Mittelebene eines Rumpfes angeordnet sind, wobei die hinteren Enden der beiden Dreharme (32) an dem Stielbalken (34) angelenkt sind und die Kopfenden der beiden Dreharme (32) jeweils an den beiden teleskopischen Hydraulikzylindern (43) angelenkt sind, wobei die Maschinenhände (33) zwischen den beiden Dreharme (32) angeordnet sind.

5. Hydraulisches, geneigtes Vortriebsinstallationssystem für Offshore-Windturbinen (60) nach Anspruch 4, **dadurch gekennzeichnet, dass** die Maschinenhände (33) obere Maschinenhände (331) und untere Maschinenhände (332) umfassen, die gelenkig miteinander verbunden sind, wobei die oberen Maschinenhände (331) und die unteren Maschinenhände (332) bogenförmig sind; wobei die Maschinenhände (33) an den beiden Dreharme (32) symmetrisch um den Längsschnitt in der Mittelebene des Rumpfes angeordnet sind; wobei jeweils zwei symmetrisch angeordnete Maschinenhände (33) eine Gruppe bilden und in einem geschlossenen Zustand einen vollständigen Kreis bilden.

6. Hydraulisches, geneigtes Vortriebsinstallationssystem für Offshore-Windturbinen (60) nach Anspruch 5, **dadurch gekennzeichnet, dass** eine Vielzahl von Gruppen von Maschinenhände (33) angeordnet sind und gleichmäßig in der Längsrichtung der Dreharme (32) angeordnet sind.

7. Hydraulisches, geneigtes Vortriebsinstallationssystem für Offshore-Windturbinen (60) nach Anspruch 1, **dadurch gekennzeichnet, dass** das hydraulische System ferner Hydrauliksockel (42) umfasst, die fest auf dem Deck montiert sind; wobei jeder teleskopische Hydraulikzylinder eine hydraulische Stange (431) der ersten Stufe, eine hydraulische Stange (432) der zweiten Stufe und eine hydraulische Stange (433) der dritten Stufe umfasst, die sequentiell von außen nach innen verschachtelt sind; und wobei die unteren Enden der hydraulischen Stangen (431) der ersten Stufe an den Hydrauliksockel (42) angelenkt sind und die oberen Enden der hydraulischen Stangen (433) der dritten Stufe an die Dreharme (32) durch Verbindungsstangen (35) angelenkt sind.

8. Hydraulisches, geneigtes Vortriebsinstallationssystem für Offshore-Windturbinen (60) nach Anspruch 1, **dadurch gekennzeichnet, dass** jede Hebevorrichtung (50) für die Windturbinenanordnung ein Mittschiffs-Säule (51) und Windturbinen-Heber (52) umfasst, wobei die Mittschiffs-Säulen (51) vertikal auf dem Deck des Windturbinen-Installationsschiffs (10) montiert sind und vertikale erste Schienen (511) an den Mittschiffs-Säulen (51) angeordnet sind, wobei die Windturbinen-Heber (52) in Passung mit den ersten Schienen (511) sind und sich entlang der ersten Schienen (511) auf und ab bewegen können, wobei jeder Windturbinen-Heber (52) einen Gleiter (522) und einen Kragbalken (523) umfasst, wobei die Gleiter (522) innen mit Antriebsvorrichtungen versehen sind, um die Gleiter (522) anzutreiben, damit sie sich entlang der ersten Schienen (511) auf und ab bewegen, wobei die Kragbalken (523) fest mit den Gleitern (522) verbunden sind und die Endteile der Kragbalken (523) mit Befestigungsklammern (525) zum Halten der Windturbinen (60) versehen sind.

9. Hydraulisches, geneigtes Vortriebsinstallationssystem für Offshore-Windturbinen (60) nach Anspruch 8, **dadurch gekennzeichnet, dass** vertikale Schwalbenschwanzverbindungen (55) an den Mittschiffs-Säulen (51) angeordnet sind und die Form von Bogenblöcken haben, wobei vertikale Zahnstangen an zwei Seitenflächen jeder Schwalbenschwanzverbindung (55) angeordnet sind und zusammen die entsprechende erste Schiene (511) bilden; wobei die Innenseiten der Gleiter (522) mit zweiten Zahnrädern (521) versehen sind und die Außenseiten der Gleiter (522) mit den Kragbalken (523) versehen sind, wobei die zweiten Zahnräder (521) mit den Zahnstangenschienen im Eingriff sind, und die Antriebsvorrichtungen in den Gleitern (522) treiben die zweiten Zahnräder (521) an, um sich entlang der ersten Schienen (511) auf und ab zu bewegen.

10. Hydraulisches, geneigtes Vortriebsinstallationssystem für Offshore-Windturbinen (60) nach Anspruch 9, **dadurch gekennzeichnet, dass** die inneren Seitenflächen der Gleiter (522) eine konkave Bogenfläche sind und mit den äußeren Bogenflächen der Schwalbenschwanzverbindungen (55) übereinstimmen, wobei an der Innenseite jedes Gleiters (522) zwei Reihen zweiter Zahnräder (521) vorgesehen sind, wobei jede Reihe mindestens ein zweites Zahnrad (521) umfasst und die zwei Reihen zweiter Zahnräder (521) an jedem Gleiter (522) jeweils mit den Zahnstangen an zwei Seitenflächen der entsprechenden Schwalbenschwanzverbindung (55) in Eingriff sind, und wobei die Antriebsvorrichtungen in den Gleitern (522) die zweiten Zahnräder (521) antreiben, um sich auf den Zahnstangen zu drehen, um so die gesamten Windturbinen-Heber (52) anzutreiben, um eine Hebebewegung an den Mittschiffs-Säulen (51) durchzuführen.

11. Hydraulisches, geneigtes Vortriebsinstallationssystem für Offshore-Windturbinen (60) nach Anspruch 8, **dadurch gekennzeichnet, dass** eine Vielzahl von Windturbinen-Heber (52) angeordnet sind und rotierende Speichervorrichtungen (53) an den oberen und unteren Enden jedes Mittschiffs-Säule (51) installiert sind, wobei die rotierenden Speichervorrichtungen (53) an jedem Mittschiffs-Säule (51) koaxial mit dem Mittschiffs-Säule (51) angeordnet sind und um eine zentrale Achse rotieren können, wobei jede rotierende Speichervorrichtung (53) mit einer Vielzahl von zweiten Schienen (531) in der Umfangsrichtung versehen ist, wobei die Anzahl der zweiten Schienen (531) gleich der Anzahl der Windturbinen-Heber (52) ist, wobei die zweiten Schienen (531) die gleiche Struktur wie die ersten Schienen (511) haben und mit der ersten Schiene (511) gepaart werden können, und wobei die Windturbinen-Heber (52) sich auf den zweiten Schienen (531) bewegen können.

12. Hydraulisches, geneigtes Vortriebsinstallationssystem für Offshore-Windturbinen (60) nach Anspruch 11, **dadurch gekennzeichnet, dass** die Schwalbenschwanzverbindungen (55), die in ihrer Anzahl den Windturbinen-Hebern (52) entsprechen, gleichmäßig an jeder rotierenden Speichervorrichtung (53) in Umfangsrichtung angeordnet sind, und dass zwei Seitenflächen jeder Schwalbenschwanzverbindung (55) mit vertikalen Zahnstangen versehen sind, und wobei die beiden Zahnstangen zusammen die zweite Schiene (531) bilden.

13. Hydraulisches, geneigtes Vortriebsinstallationssystem für Offshore-Windturbinen (60) nach Anspruch 11, **dadurch gekennzeichnet, dass** die rotierenden Speichervorrichtungen (53) an den unteren Enden der Mittschiffs-Säulen (51) unterhalb des Decks des Windturbinen-Installationsschiffs angeordnet sind und die Verbindungen zwischen dem Deck und den Mittschiffs-Säulen (51) mit Decköffnungen versehen sind.

14. Hydraulisches, geneigtes Vortriebsinstallationssystem für Offshore-Windturbinen (60) nach Anspruch 8, **dadurch gekennzeichnet, dass** die Hebevorrichtungen (50) für die Windturbinenanordnung weiterhin Hülsen umfassen, die die Peripherien der Mittschiffs-Säulen (51) umhüllen, wobei eine Seite der Hülsen (54) mit vertikalen Öffnungen versehen ist, wobei die Kragbalken (523) der Windturbinen-Heber (52) aus den Öffnungsenden der Hülsen (54) herausragen und die Hülsen zum Verstärken und Schützen der Mittschiffs-Säule (51) verwendet werden.

15. Hydraulisches, geneigtes Vortriebsinstallationssystem für Offshore-Windturbinen (60) nach Anspruch 1, **dadurch gekennzeichnet, dass** die Hebevorrichtungen (50) für die Windturbinenanordnung symmetrisch auf der Portseite und der Steuerbordseite des Windturbinen-Installationsschiffs (10) angeordnet sind, wobei jeweils zwei Hebevorrichtungen (50) für die Windturbinenanordnung eine Gruppe bilden; und wobei das Windturbinen-Installationsschiff (10) mit einer Mehrzahl von Gruppen von Hebevorrichtungen (50) für die Windturbinenanordnung in der Längsrichtung versehen ist.

## Revendications

1. Système d'installation de vérin hydraulique incliné pour éoliennes marines (60), le système comprenant un navire d'installation d'éolienne (10), des poteaux d'étrave (20), un dispositif rotatif (30), un système hydraulique (40) et des dispositifs de levage d'agencement d'éolienne (50), dans lequel les poteaux d'étrave (20) sont montés verticalement sur l'étrave d'un pont du navire d'installation d'éolienne (10), et les poteaux d'étrave (20) sont pourvus de rails de guidage d'étrave verticaux (21) ;
le dispositif rotatif (30) comprend des mécanismes de levage d'engrenage (31), des bras rotatifs (32) et des robots industriels (33), les mécanismes de levage d'engrenage (31) coopèrent avec les rails de guidage d'étrave (21) et peuvent se déplacer vers le haut ou vers le bas le long des rails de guidage d'étrave (21), les extrémités arrières des bras rotatifs (32) sont articulées sur les mécanismes de levage d'engrenage (31) et les robots industriels (33) sont montés sur les bras rotatifs (32) ;
le système hydraulique (40) comprend des unités de puissance hydraulique (41) et des vérins hydrauliques télescopiques (43) montés sur le pont, les extrémités inférieures des vérins hydrauliques télescopiques (43) sont articulées sur le pont, les extrémités supérieures des vérins hydrauliques télescopiques (43) sont articulées aux extrémités avant des bras rotatifs (32), et les unités de puissance hydrauliques (41) are configurées pour entraîner les vérins hydrauliques télescopiques (43) à s'étendre et à se rétracter dans la direction axiale, entraînant ainsi les bras rotatifs (32) à tourner ;
et les dispositifs de levage d'agencement d'éolienne (50) sont montés sur le pont du navire d'installation d'éolienne (10) et sont agencés en correspondance au-dessous des bras rotatifs (32), des éoliennes (60) en attente d'installation sont agencées horizontalement sur les dispositifs de levage d'agencement d'éolienne (50) et les robots industriels (33) sont utilisés pour maintenir les tours des éoliennes (60).

2. Système d'installation de vérin hydraulique incliné pour éoliennes marines (60) selon la revendication 1, **caractérisé en ce que** deux poteaux d'étrave (20) sont disposés de manière symétrique sur un côté bâbord et un côté tribord du pont ; et de manière correspondante, deux mécanismes de levage d'engrenage (31) sont disposés et coopèrent respectivement avec les rails de guidage d'étrave (21) sur les deux poteaux d'étrave (20), et les deux mécanismes de levage d'engrenage (31) sont reliés au moyent d'une poutre d'étrave (34).

3. Système d'installation de vérin hydraulique incliné pour éoliennes marines (60) selon la revendication 2, **caractérisé en ce que** chaque mécanisme de levage d'engrenage (31) comprend un cadre de montage d'engrenage (311) et des premiers engrenages (312) montés de part et d'autre du cadre de montage d'engrenage (311), chaque cadre de montage d'engrenage (311) étant pourvu à l'intérieure d'un moteur pour entraîner les premiers engrenages (312) à tourner; des rainures verticales sont respectivement disposées sur des surfaces en opposé des deux poteaux d'étrave (20), et des crémaillères sont disposées sur deux surfaces latérales en opposé de chaque rainure et forment le rail de guidage d'étrave correspondant (21) ; les cadres de montage d'engrenage (311) sont agencés dans les rainures, et les premiers engrenages (312) de part et d'autre de chaque cadre de montage d'engrenage (311) s'engrènent respectivement avec les deux crémaillères dans la rainure correspondante, et les moteurs entraînent les premiers engrenages (312) à tourner sur les crémaillères ; et les deux cadres de montage d'engrenage (311) sont respectivement reliés de manière fixe à deux extrémités de la poutre d'étrave (34).

4. Système d'installation de vérin hydraulique incliné pour éoliennes marines (60) selon la revendication 2, **caractérisé en ce que** les deux bras rotatifs (32) et les deux vérins hydrauliques télescopiques (43) sont disposés respectivement de manière correspondante et de manière symétrique par rapport à la section longitudinale dans le plan médian d'un carter ; respectivement, les extrémités arrières des deux bras rotatifs (32) sont articulées sur la poutre d'étrave (34) et les extrémités avant des deux bras rotatifs (32) sont articulées sur les deux vérins hydrauliques télescopiques (43) ; et les robots industriels (33) sont disposées entre les deux bras rotatifs (32).

5. Système d'installation de vérin hydraulique incliné pour éoliennes marines (60) selon la revendication 4, **caractérisé en ce que** les robots industriels (33) comprennent des robots industriels supérieures (331) et des robots industriels inférieures (332) qui sont articulées l'une à l'autre, les robots industriels supérieures (331) et les robots industriels inférieures (332) étant chacun en forme d'arc ; les robots industriels (33) sur les deux bras rotatifs (32) étant disposées de manière symétrique par rapport à la section longitudinale dans le plan médian du carter ; et chacun des deux robots industriels (33) disposées de manière symétrique formant un groupe et un cercle complet à un état fermé.

6. Système d'installation de vérin hydraulique incliné pour éoliennes marines (60) selon la revendication 5, **caractérisé en ce qu'**une pluralité de groupes de robots industriels (33) sont disposés de manière uniforme dans la direction de la longueur des bras rotatifs (32).

7. Système d'installation de vérin hydraulique incliné pour éoliennes marines (60) selon la revendication 1, **caractérisé en ce que** le système hydraulique comprend en outre des sièges hydrauliques (42), les sièges hydrauliques (42) étant montés de manière fixe sur le pont ; chaque vérin hydraulique télescopique comprend une tige hydraulique du premier étage (431), une tige hydraulique du deuxième étage (432) et une tige hydraulique du troisième étage (433) qui sont emboîtées en séquence de l'extérieur vers l'intérieur ; et les extrémités inférieures des tiges hydrauliques du premier étage (431) étant articulées aux sièges hydrauliques (42), et les extrémités supérieures des tiges hydrauliques du troisième étage (433) étant articulées aux bras rotatifs (32) au moyen des bielles (35).

8. Système d'installation de vérin hydraulique incliné pour éoliennes marines (60) selon la revendication 1, **caractérisé en ce que**, chaque dispositif de levage d'agencement d'éolienne (50) comprend un pilier médian (51) et des élévateurs d'éolienne (52), les piliers médians (51) étant montés de manière verticale sur le pont du navire d'installation d'éolienne (10), des premiers rails verticaux (511) étant disposés sur les piliers médians (51), les élévateurs d'éolienne (52) coopérant avec les premiers rails (511) et pouvant se déplacer vers le haut ou vers le bas le long des premiers rails (511), chaque élévateur d'éolienne (52) comprenant un coulisseau (522) et une poutre en porte-à-faux (523), les coulisseaux (522) étant pourvus à l'intérieur de dispositifs d'entraînement pour entraîner, les coulisseaux (522) à se déplacer vers le haut ou vers le bas le long des premiers rails (511), les poutres en porte-à-faux (523) étant reliées de manière fixe aux coulisseaux (522), et les parties d'extrémité des poutres en porte-à-faux (523) étant pourvus de pinces de fixation (525) pour maintenir les éoliennes (60).

9. Système d'installation de vérin hydraulique incliné pour éoliennes marines (60) selon la revendication 8, **caractérisé en ce que** des joints verticaux en queue d'aronde (55) sont disposés sur les piliers médians (51) et sont en forme de blocs d'arc, et des crémaillères verticales sont disposées au niveau de deux surfaces latérales de chaque joint en queue d'aronde (55), formant ensemble le premier rail correspondant (511) ; les côtés intérieurs des coulisseaux (522) sont pourvus de deuxièmes engrenages (521), les côtés extérieurs des coulisseaux (522) sont pourvus des poutres en porte-à-faux (523), les deuxièmes engrenages (521) s'engrènent avec les rails de crémaillère, et les dispositifs d'entraînement dans les coulisseaux (522) entraînent les deuxièmes engrenages (521) à se déplacer vers le haut ou vers le bas le long des premiers rails (511).

10. Système d'installation de vérin hydraulique incliné pour éoliennes marines (60) selon la revendication 9, **caractérisé en ce que** chacune des surfaces latérales intérieures des coulisseaux (522) est une surface en arc concave et adaptée à la surface en arc extérieure du joint en queue d'aronde (55), deux colonnes des deuxièmes engrenages (521) sont disposées sur le côté intérieur de chaque coulisseau (522), chaque colonne comprenant au moins un deuxième engrenage (521), les deux colonnes des deuxièmes engrenages (521) sur chaque coulisseau (522) sont respectivement s'engrène avec les crémaillères sur deux surfaces latérales du joint en queue d'aronde correspondant (55), et les dispositifs d'entraînement dans les coulisseaux (522) entraînent les deuxièmes engrenages (521) à tourner sur les crémaillères, entraînant ainsi tout l'élévateur d'éolienne (52) pour effectuer un mouvement de levage sur les piliers médians (51).

11. Système d'installation de vérin hydraulique incliné pour éoliennes marines (60) selon la revendication 8, **caractérisé en ce que** une pluralité d'élévateurs d'éolienne (52) sont disposés et des dispositifs de stockage rotatifs (53) sont disposés aux extrémités supérieure et inférieure de chaque pilier médian (51), les dispositifs de stockage rotatifs (53) sur chaque pilier médian (51) étant disposés de manière coaxiale au pilier médian (51) et pouvant tourner autour d'un axe central, chaque dispositif de stockage rotatif (53) étant pourvu d'une pluralité de deuxièmes rails (531) dans la direction circonférentielle, le nombre des deuxièmes rails (531) étant égal au nombre des élévateurs d'éolienne (52), les deuxièmes rails (531) présentant la même structure que les premiers rails (511) et pouvant coopérer avec le premier rail (511), et les élévateurs d'éolienne (52) pouvant se déplacer sur les deuxièmes rails (531).

12. Système d'installation de vérin hydraulique incliné pour éoliennes marines (60) selon la revendication 11, **caractérisé en ce que** les joints en queue d'aronde (55) dont le nombre est égal à celui des élévateurs d'éolienne (52) sont disposés de manière uniforme sur chaque dispositif de stockage rotatif (53) dans la direction circonférentielle, deux surfaces latérales de chaque joint en queue d'aronde (55) sont pourvues de crémaillères verticales, et les deux crémaillères forment ensemble le deuxième rail (531).

13. Système d'installation de vérin hydraulique incliné pour éoliennes marines (60) selon la revendication 11, **caractérisé en ce que** les dispositifs de stockage rotatifs (53) aux extrémités inférieures des piliers médians (51) sont disposées au-dessous le pont du navire d'installation d'éolienne, et les joints entre le pont et les piliers médians (51) sont pourvus d'ouvertures de pont.

14. Système d'installation de vérin hydraulique incliné pour éoliennes marines (60) selon la revendication 8, **caractérisé en ce que** les dispositifs de levage d'agencement d'éolienne (50) comprennent en outre des manchons, les manchons gainant les périphéries des piliers médians (51), les manchons (54) étant pourvus chacun sur un côté d'ouvertures verticales, les poutres en porte-à-faux (523) des élévateurs d'éolienne (52) s'étendant en saillie des extrémités d'ouverture des manchons (54) et les manchons étant utilisés pour renforcer et protéger le piliers médians (51).

15. Système d'installation de vérin hydraulique incliné pour éoliennes marines (60) selon la revendication 1, **caractérisé en ce que** les dispositifs de levage d'agencement d'éolienne (50) sont disposés de manière symétrique sur un côté bâbord et un côté tribord du navire d'installation d'éolienne (10), tous les deux dispositifs de levage d'agencement d'éolienne (50) formant un groupe ; et que le navire d'installation d'éolienne (10) est pourvu d'une pluralité de groupes de dispositifs de levage d'agencement d'éolienne (50) dans la direction de la longueur.
